# EUROPÄISCHE PATENTSCHRIFT

(11) **EP 1 458 491 B1**
(45) Veröffentlichungstag und Bekanntmachung des Hinweises auf die Patenterteilung: **04.04.2007**
(21) Anmeldenummer: 02792571.8
(22) Anmeldetag: 12.12.2002
(51) Int. Cl.: B05C 1/06, B65H 71/00, B23K 9/133

(54) **VORRICHTUNG UND VERFAHREN ZUM BEHANDELN VON DRAHTMATERIAL**
DEVICE AND METHOD FOR TREATING WIRE MATERIAL
DISPOSITIF ET PROCEDE POUR TRAITER UN MATERIAU SOUS FORME DE FIL

(30) Priorität: 20.12.2001 AT 19942001
(43) Veröffentlichungstag der Anmeldung: 22.09.2004
(73) Patentinhaber: Hoffmann, Hans, 5026 Salzburg (AT)
(72) Erfinder: Hoffmann, Hans, 5026 Salzburg (AT)
(74) Vertreter: Flosdorff, Jürgen
(86) Internationale Anmeldenummer: PCT/AT2002/000347
(87) Internationale Veröffentlichungsnummer: WO 2003/053594

(56) Entgegenhaltungen:
- FR-A- 2 703 036
- US-A- 2 357 079
- US-A- 3 034 477
- US-A- 3 877 414
- US-A- 4 601 918

## Beschreibung

Die Erfindung betrifft eine Vorrichtung der im Oberbegriff des Anspruchs 1 angegebenen Art.

Eine derartige Vorrichtung ist aus US-A-3 877 414 bekannt.

Bei der Drahtherstellung, beim Schweißen mit Drahtelektroden, und in der Drahtverarbeitung ist oftmals eine Drahtbehandlung zweckmäßig. Gemäß DE-A-20 45 800 wird Schweißdraht einem Block aus festem Schmiermittel entlang gezogen, um den Gleitwiderstand herabzusetzen bzw. zu vergleichmäßigen. Gemäß US-A-2 819 314 wird Schweißdraht mit partikelförmigen Festschmierstoffen geschmiert. In der Schweißtechnik werden sogenannte Reinigungsfilze mit einem Reinigungsmittel getränkt auf den Schweißdraht aufgeklemmt. Gemäß AT 405799 wird durch ein saugfähiges Substrat Kontaktschmiermittel zum Lichtbogenschweißen auf die Drahtelektrode aufgebracht, um den Stromübergang in der Kontaktdüse zu vergleichmäßigen und zu verbessern.

Bei der Herstellung gezogener Drähte wird in der Praxis nach dem Blankzug ein Behandlung zum Beseitigen von Ziehmittelresten durchgeführt, wobei das Drahtmaterial zwischen gegeneinander gepressten Filzstreifen durchgezogen wird. Die Filzstreifen liegen zwischen Andruckelementen und werden taktweise verstellt und aufgewickelt. Das Drahtmaterial läuft jeweils über längere Zeit in derselben Spur. Der spurartige Kontaktbereich ist visuell nicht zu inspizieren. Das Verstellen der Filzstreifen oder deren Austausch erfolgt nach Erfahrungsrichtlinien oder Gefühl, was bedeutet, dass häufig zu spät oder zu früh weitergedreht oder ausgetauscht wird.

Ein zu spätes Weiterdrehen oder Austauschen resultiert in schlechter Behandlungsqualität. Ein zu frühes Weiterdrehen oder ein zu früher Austausch resultiert in ungenutzter Kapazität der Vorrichtung. Trotz aller Bemühungen lassen sich deshalb Schwankungen der Qualität der Drahtbehandlung nicht vermeiden, unabhängig davon, ob das Drahtmaterial gereinigt, imprägniert, benetzt oder auf andere Weise behandelt wird. Der Anwender bzw. Verarbeiter des Drahtmaterials muss mit diesem Lieferzustand leben, der nicht kontrollierbare Einfluss auf die Qualität und Prozesssicherheit bei der Anwendung bzw. Drahtverarbeitung hat. Wie wichtig beispielsweise die Oberflächenqualität behandelten Schweißelektroden-Drahtmaterials ist, lässt sich aus dem Artikel "Neue Erkenntnisse beim MAGN-Hochleistungsschweißen mit rotierendem Lichtbogen" in der Zeitschrift "Schweiß- und Prüftechnik", 3/97, S. 34 - 41, entnehmen.

Der Erfindung liegt die Aufgabe zugrunde, eine Vorrichtung der eingangs genannten Art zu schaffen und ein entsprechendes Verfahren anzugeben, mit denen die Drahtbehandlung und ihr Resultat optimierbar sind im Hinblick auf gleichbleibend hohe Effizienz der Vorrichtung und gute Qualität des behandelten Drahtmaterials.

Die gestellte Aufgabe wird gegenständlich mit den Merkmalen des Anspruchs 1 und verfahrenstechnisch mit den Merkmalen des Anspruches 22 gelöst.

Die zur Ansicht bewusst freigelassene Sichtkontrollzone präsentiert sozusagen den Oberflächenzustand im Überlappungsbereich, der damit visuell oder gegebenenfalls mit einer Hilfsvorrichtung detektierbar als Entscheidungshilfe zur Verstellung oder zum Austausch der Substrate vorliegt. Neben oder zusätzlich zu einer visuellen Inspektion durch Personal kann eine Vorrichtung (eine Kamera oder eine die Lichtabsorption oder Reflexionseigenschaften abtastende Vorrichtung) verwendet werden. Die Substrate sind deshalb exakt bis zu dem Punkt nutzbar, ab dem eine Verschlechterung der Behandlungsqualität zu befürchten oder nicht mehr zu vermeiden ist. Dies bringt mehrere Vorteile. Die Substrate lassen sich effizient und genau bis zu einer wählbaren Grenze zum Schlechteren optimal nutzen. Die Entscheidungshilfe der permanent einsehbaren Qualität der Sichtkontrollzone ermöglicht es, die Behandlungsqualität und Endqualität des Drahtmaterials gleichbleibend hoch zu halten, da die Substrate jeweils erst vor einer unzulässigen Verschlechterung der Behandlungsqualität verstellt oder ausgetauscht werden können, und nicht zu früh. Die Effizienz ist gesteigert, da die Kapazität der Substrate ohne Gefahr für die Behandlungsqualität voll nutzbar ist, und zwar auch unabhängig davon, ob die Substrate schnell oder langsam verschmutzen oder verschleißen. Wird mit der Vorrichtung behandeltes Drahtmaterial als Drahtelektroden für Schweißprozesse oder beim MIG-Löten eingesetzt, dann lässt sich hohe Schweiß-Prozesssicherheit erreichen. Ähnliches gilt für die Weiterverarbeitung von Federstahldraht zu Fertigprodukten wie Federn. Es lässt sich auch mit der Vorrichtung Drahtmaterial für die WIG-Schweißung, Plasma- und Laser-Schweißung bis zur absoluten Reinheit beispielsweise mit alkalischen Stoffen behandeln. Die Gleiteigenschatten von Drahtmaterial lassen sich gleichmäßig verbessern. Ein Korrosionsschutz kann ebenfalls gleichmäßig aufgebracht werden. Das Drahtmaterial kann mit der Vorrichtung beim Drahthersteller im Herstellungsprozess behandelt werden, um Schwankungen der Oberflächen- oder Behandlungsqualität zu minimieren. Alternativ kann ein Drahtanwender der Vorrichtung herstellerseitige Qualitätsschwankungen kompensieren, und die ihm wichtig erscheinende Qualität und Prozesssicherheit unabhängig vom "gelieferten" Behandlungszustand herbeiführen. Die Substrate können schrittweise oder permanent verstellt werden, und war entweder präventiv, um die ganze Oberfläche allmählich und gleichmäßig verteilt zu verschleißen, oder erst bei Bedarf, in jedem Fall jedoch unter Inspektion des Zustandes der Sichtkontrollzone. Auch Schweißdrahtbalsam kann so mit gleichbleibender Qualität aufgebracht werden. Von Aluminiumdraht könnten zunächst mit Reinigungs- und/oder Lösungsmittel Ziehmittelreste entfernt werden, ehe in der Vorrichtung gleichbleibend hochwertig gereinigt und dann sogar getrocknet wird. Auch Oxidhäute können auf diese Weise mit hoher und gleichmäßiger Qualität entfernt werden. Einzelne Behandlungsschritte wie Anlösen, Reinigen, Trocknen, und Beschichten, können in einem Durchlauf vorgenommen werden.

Ein Endverbraucher, z.B. in der Automobilindustrie, hat bei der Verarbeitung von Aluminiumdraht oder CUSI-Draht die Möglichkeit, eine solche Vorrichtung unmittelbar nach der Drahtentnahme zur Reinigung und/oder Beschichtung einzusetzen und Qualitätsschwankungen vom Drahtlieferanten zu beseitigen. Es können auch abrasive Substanzen eingesetzt werden, um die Oberfläche des Drahtmaterials zu glätten und/oder eine Oxidhaut zu entfernen. Die baulich einfachen Maßnahmen, die funktionsnotwendige Überlappung der Substrate bewusst zur Schaffung einer Sichtkontrollzone zu modifizieren, und die Sichtkontrollzone in etwa quer zur Drahtlaufrichtung zu verstellen, um den Oberflächenzustand im Überlappungsbereich mitablesbar zu machen, schaffen die Voraussetzungen, die Leistungsfähigkeit der Substrate besser als bisher zu nutzen, und die Behandlung optimierend zu steuern, und für eine gleichbleibend hohe Behandlungsqualität zu sorgen.

Vorteilhafte Ausführungsformen gehen aus den Unteransprüchen hervor.

Anhand der Zeichnung werden Ausführungsformen der Erfindung erläutert. Es zeigen:
- Fig. 1: eine Seitenansicht einer Behandlungsvorrichtung,
- Fig. 2: einen Achsschnitt in Fig. 1,
- Fig. 3: eine Seitenansicht einer anderen Vorrichtung mit drei Stationen,
- Fig. 4: eine Seitenansicht einer anderen Ausführungsform,
- Fig. 5: eine Seitenansicht einer weiteren Ausführungsform,
- Fig. 6: eine Seitenansicht einer weiteren Ausführungsform,
- Fig. 7,7A + 8: Seitenansichten weiterer Ausführungsformen,
- Fig. 9: eine Perspektivansicht einer weiteren Ausführungsform, und
- Fig. 10: eine Seitenansicht einer weiteren Ausführungsform.

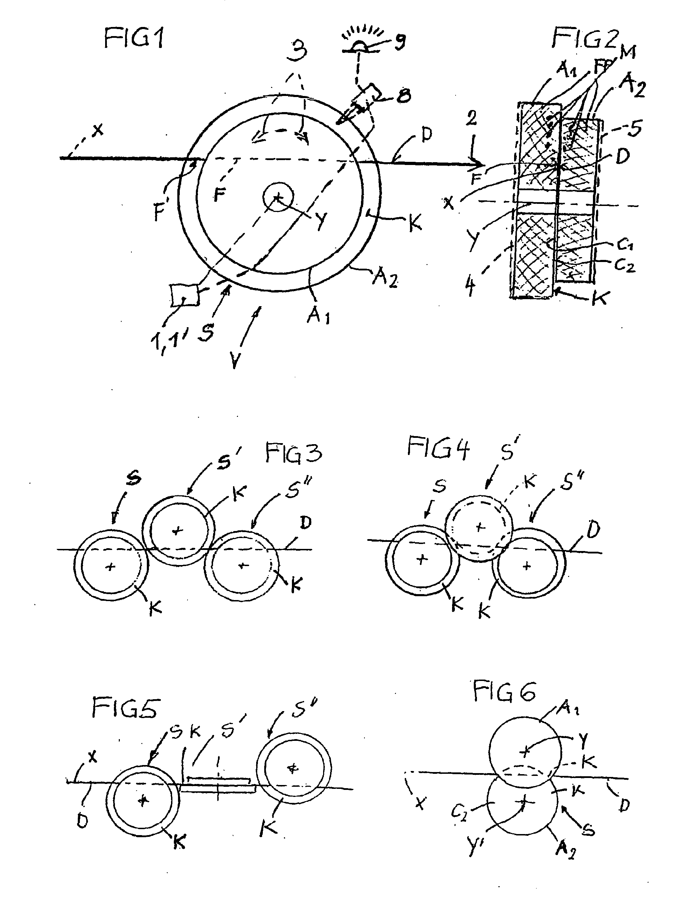

Eine Vorrichtung V in den Fig. 1 und 2 dient zum Behandeln von laufendem Drahtmaterial D (Drahtlaufrichtung 2, Drahtachse X), d.h. insbesondere zum Reinigen und/oder Benetzen und/oder Imprägnieren, und weist wenigstens eine Station S auf, in der zwei z.B. flächige Substrate A1, A2 (hier kreisrunder Form) einer bestimmten Dicke mit ihren Oberflächen C1, C2 mehr oder weniger aneinander gepresst sind. Das Drahtmaterial D läuft im Wesentlichen gestreckt durch. Gegebenenfalls sind die Substrate A1, A2 auf starren Trägern 4, 5, z.B. aus Metall, Kunststoff oder Holz angeordnet.

Das Substrat A2 hat in Fig. 1 und 2 einen kleineren Außendurchmesser als das koaxial auf z.B. einer gemeinsamen Drehachse Y angeordnete Substrat A. Von der Oberfläche C1 des Substrates A1 liegt eine Sichtkontrollzone K (hier in Kreisringform) frei, in der das Drahtmaterial D einseitig in einem Kontaktbereich F' beaufschlagt wird. Die Sichtkontrollzone K ist permanent visuell oder durch eine, z.B. optoelektronische, Vorrichtung 8 auf ihren Oberflächenzustand überprüfbar. Im Überlappungsbereich wird das Drahtmaterial D in einem spurartigen Kontaktbereich F behandelt, falls die Substrate stehen. Der Pfeil 3 deutet an, dass die Substrate A1, A2 entweder in oder gegen die Drahtlaufrichtung 2 drehbar sind. Die Drehung kann beispielsweise durch die Reibungskraft des laufenden Drahtmaterials D erfolgen (z.B. über eine steuerbare Bremse 1'), oder mit Hilfe eines Antriebs 1. Die Drehung kann schrittweise oder kontinuierlich gesteuert werden. Es ist denkbar, beide Substrate unterschiedlich schnell und/oder in unterschiedlichen Richtungen relativ zueinander zu drehen. Wichtig ist, dass die Verstellbewegung der Substrate mit einer in etwa quer zur Drahtlaufrichtung 2 orientieren Bewegungskomponente der Sichtkontrollzone K erfolgt, um deren Oberflächenzustand überprüfbar zu zeigen.

Aus dem Oberflächenzustand (z.B. des jeweiligen Kontaktbereiches F') der Sichtkontrollzone K lässt sich direkt auf den Oberflächenzustand im Überlappungsbereich schließen. Dadurch lässt sich genau detektieren, wenn die Oberflächen so weit abgenutzt und/oder verschmutzt sind und/oder nur mehr eingeschränkt so funktionieren, z.B. weil Behandlungsmaterial verbraucht worden ist, dass die Behandlungsqualität für das Drahtmaterial D nachlassen würde. Dann reicht es, die Substrate um einen Schritt weiter zu drehen oder kontinuierlich weiter zu drehen. Ist bereits die gesamte Sichtkontrollzone K mehr oder minder gleichmäßig verschmutzt/abgenutzt oder sichtbar beeinträchtigt, ist ein Austausch der Substrate erforderlich.

Die Sichtkontrollzone K gibt die notwendige Entscheidungshilfe, die Verstellung und/oder den Austausch dann vorzunehmen, wenn es sich im Hinblick auf die zu erzielende Behandlungsqualität nicht mehr vermeiden lässt. Die lokale Darstellung des allgemeinen Oberflächenzustands mittels der Sichtkontrollzone K kann auch genutzt werden, um die Zugabe irgendwelcher Behandlungsmittel zu den Substraten zu steuern, z.B. durch Aufträufeln, Aufsprühen oder dgl. Neben oder alternativ zur visuellen Inspektion kann die Kontrollzone K durch eine Kamera oder ein Lichtabsorptions- oder Reflexionsgerät (Vorrichtung 8) überwacht werden, um den Zeitpunkt einer Verstellung (Pfeil 3) oder des Austausches automatisch festzustellen. Die Vorrichtung 8 kann mit dem Antrieb 1 oder der Bremse 1' wirkungsmäßig gekoppelt sein, und/oder mit einer Alarmquelle 9.

Die Substrate A1, A2 sind beispielsweise Platten, Streifen oder Scheiben aus Filz, Vlies, Gewebe, Schaumstoff, Kunststoff oder dgl., vorzugsweise mit Saugeigenschaften und/oder gegebenenfalls mit abrasiven Eigenschaften. In die Substrate A1, A2 können flüssige, pastöse oder pulvrige Mittel eingebracht sein, die die Behandlung unterstützen, oder für die Behandlung sogar wesentlich sind. Die eingebrachten Mittel können z.B. umfassen: Reinigungsmittel, Gleitmittel, abrasive Mittel, Kontaktmittel, alkalische Mittel, ölige oder wachsartige Mittel, Benetzungsmittel, Schweißdrahtbalsam, Lösungsmittel, und dgl.

Die Substrate A1, A2 können auf der Drehachse Y drehfest angebracht sein, so dass sie sich nicht relativ zueinander verdrehen. Alternativ ist es möglich, zumindest das eine Substrat drehbar gegenüber dem anderen auf der Drehachse anzuordnen.

Obwohl in den Fig. 1 und 2 nur ein Drahtmaterial D gezeigt ist, können gleichzeitig auch mehrere parallel zueinander durch die Station gezogen werden. Der Anpressdruck zwischen den Substraten A1, A2 kann einstellbar sein.

In Fig. 3 hat die Vorrichtung beispielsweise drei Stationen S, S', S" für gleichartige oder verschiedenartige Behandlungsschritte. In jeder Station ist wenigstens eine Sichtkontrollzone K permanent inspizierbar dargeboten. Die Stationen liegen bezüglich der Drahtachse X in einer gemeinsamen Ebene, und so, dass die Sichtkontrollzonen K zur selben Seite der Drahtachse weisen.

In Fig. 4 mit drei Stationen ist die Sichtkontrollzone K in der mittleren Station S' zur anderen Seite der Drahtachse X gewandt. Außerdem überlappen sich die Sichtkontrollzonen K der ersten und zweiten und der zweiten und dritten Stationen. Obwohl für die drei Stationen drei Sichtkontrollzonen K vorgesehen sind, wird das Drahtmaterial D dennoch nirgends einseitig freigegeben.

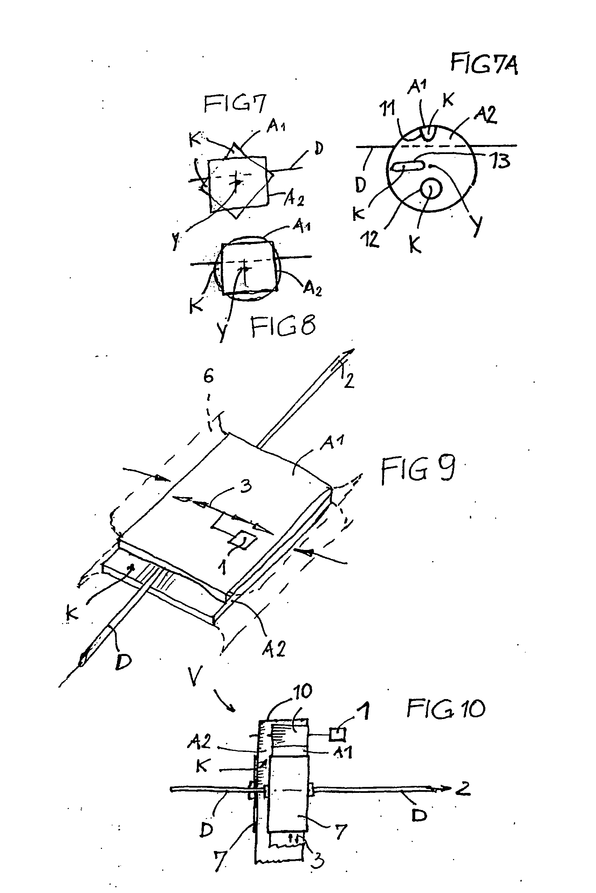

In Fig. 5 mit drei Stationen ist die mittlere Station S' um 90° gegenüber den anderen Stationen S, S" um die Drahtachse X verdreht. Grundsätzlich kann es zweckmäßig sein, die Ebenen der einzelnen Stationen um die Drahtachse zueinander zu versetzen, um das Drahtmaterial in Umfangs- und in Längsrichtung möglichst gleichmäßig zu behandeln.

In Fig. 6 sind in einer Station die Substrate A1, A2 auf getrennten Drehachsen Y, Y' angeordnet, so dass sich die Oberflächen nur in einem linsenartigen Bereich überlappen. Hier sind relativ große Oberflächenbereiche der Substrate als Sichtkontrollzonen K nutzbar.

In Fig. 7 haben die Substrate A1, A2 jeweils polygonale Form, z.B. die Form von Quadraten, wobei die Substrate um die gemeinsame Drehachse Y um 90° zueinander versetzt sind, so dass durch die Versetzung und die Geometrie die Sichtkontrollzonen K gebildet werden.

In Fig. 7A wird die jeweilige Sichtkontrollzone K des Substrats A1 durch einen zum Substratrand offenen Ausschnitt 11 oder ein innerhalb des Substratrandes platziertes Fenster 12 oder 13 definiert. Der Ausschnitt 11 bzw. das Fenster 12, 13 kann jede beliebige geometrische Form haben, hier z.B. V-förmig, rund oder langlochförmig sein, und sich in nur einem oder zu einem versetzt in beiden Substraten befinden. Ein Substrat kann mehrere Ausschnitte oder Fenster haben.

In Fig. 8 haben beide Substrate A1, A2 derart unterschiedliche geometrische Figuren (Kreis und Quadrat in der gezeigten Ausführungsform), dass mehrere Sichtkontrollzonen K frei bleiben.

In Fig. 9 liegen die plattenförmigen Substrate A1, A2 (z.B. verschiedener Längen) in einem Halter 6 so aneinander, dass die Sichtkontrollzone K in etwa quer zur Drahtlaufrichtung 2 orientiert ist. Der Antrieb 1 verstellt die Sichtkontrollzone K schrittweise oder kontinuierlich in Richtung des Pfeils 3, und zwar relativ zum Halter 6 oder zusammen mit dem Halter 6.

In Fig. 10 ist eine an sich übliche Vorrichtung V modifiziert, um eine permanente Sichtkontrolle des Oberflächenzustandes der Substrate A1, A2 zu ermöglichen. Die Substrate A1, A2 sind Streifen, die mit Andruckelementen 7 (z.B. Rollen) am quer durchlaufenden Drahtmaterial D gehalten und in Pfeilrichtung 3 (aufwärts oder abwärts) quer zum Drahtmaterial D verstellt werden. Gegebenenfalls werden die verbrauchten Streifen aufgewickelt, oder die neuen Streifen abgewickelt. Die Rollen 7 können angetrieben sein. Die Streifen (und ggfs. Rollen) sind in Drahtlaufrichtung 2 verschieden breit und/oder zueinander versetzt, um wenigstens eine Sichtkontrollzone K sichtbar anzubieten.

Verfahrensgemäß wird der Zustand einer das Drahtmaterial D behandelnden an sich nicht einsehbaren Oberfläche wenigstens eines Substrats mit Hilfe einer sichtbar bleibenden Sichtkontrollzone K sichtbar gemacht. Die Sichtkontrollzone kontaktiert wie die Oberfläche das Drahtmaterial, so dass sie in etwa wie die Oberfläche verschmutzt oder verschlissen wird oder das jeweilige Behandlungsmaterial abgibt. Der Oberflächenzustand in der Sichtkontrollzone K wird visuell oder apparativ detektiert. Das Detektionsresultat wird als Entscheidungshilfe oder sogar Anlass verwendet, um die Substrate weiter zu verstellen oder auszutauschen, sobald eine nicht mehr als zulässig angesehene Verschlechterung eingetreten und detektiert ist. Die vorhandene Behandlungsqualität des jeweiligen Substrats wird sozusagen in der Sichtkontrolle abgebildet und überwacht, um die Substrate zuverlässig gerade so lange wie möglich arbeiten zu lassen, und im Hinblick auf gute Behandlungsqualität des Drahtmaterials die Substrate so effizient wie möglich auszunutzen.

## Patentansprüche

1. Vorrichtung (V) zum Behandeln von laufendem Drahtmaterial, insbesondere zum Reinigen und/oder Benetzen und/oder Imprägnieren, in der das Drahtmaterial (D) in wenigstens einer Station zwischen zwei gegen das Drahtmaterial (D) gehaltenen Substraten (A1, A2) durchläuft, deren zueinander weisende Oberflächen einander überlappen und das Drahtmaterial mit einem sich verändernden Oberflächenzustand kontaktieren, und mit einem Verstellmechanismus (1, 1') zum relativen Verstellen der Substrate wenigstens mit einer quer zur Drahtlaufrichtung (2) orientierten Bewegungskomponente, **dadurch gekennzeichnet, dass** die Substratoberflächen (C1, C2) einander nur bis auf wenigstens eine mit der Querbewegungskomponente relativ zum Drahtmaterial (D) mitverstellbare, freibleibende Sichtkontrollzone (K) überlappen, die das Drahtmaterial (D) einseitig kontaktiert.

2. Vorrichtung nach Anspruch 1, **dadurch gekennzeichnet, dass** beide Substrate (A1, A2) um eine gemeinsame Drehachse (Y) drehbar sind, dass bei zumindest im Wesentlicher gleicher geometrischer Form das eine Substrat kleiner ist als das andere, und dass die Sichtkontrollzone (K) durch den Größenunterschied am größeren Substrat gebildet ist.

3. Vorrichtung nach Anspruch 1, **dadurch gekennzeichnet, dass** beide Substrate (A1, A2) um eine gemeinsame Drehachse (Y) drehbar sind, und dass die Sichtkontrollzone (K) gebildet ist durch unterschiedliche geometrische Formen und/oder eine relative Versetzung der Substrate um die Drehachse.

4. Vorrichtung nach Anspruch 1, **dadurch gekennzeichnet, dass** die Substrate (A1, A2), vorzugsweise mit in etwa gleicher Größe und im Wesentlichen gleicher geometrischer Form um zwei parallele und in der durch die Substratoberflächen definierten Ebene beabstandete Drehachsen (Y, Y') drehbar sind.

5. Vorrichtung nach Anspruch 2 oder 4, **dadurch gekennzeichnet, dass** die Substrate (A1, A2) Kreisscheiben sind.

6. Vorrichtung nach Anspruch 3 oder 4, **dadurch gekennzeichnet, dass** die Substrate (A1, A2) polygonale Scheiben sind.

7. Vorrichtung nach Anspruch 1, **dadurch gekennzeichnet, dass** die Sichtkontrollzone (K) kleiner ist als der Überlappungsbereich.

8. Vorrichtung nach Anspruch 1, **dadurch gekennzeichnet, dass** zumindest ein Substrat (A2) einen zum Substratrand offenen Ausschnitt (11) oder ein innerhalb des Substratrandes platziertes Fenster (12, 13) aufweist, der bzw. das die Sichtkontrollzone (K) an der Oberfläche des anderen Substrats (A1) definiert.

9. Vorrichtung nach Anspruch 1, **dadurch gekennzeichnet, dass** die Verstellbewegung aus dem Reibungswiderstand der Substrate (A1, A2) am Drahtmaterial (D) ableitbar ist, vorzugsweise über eine Bremsvorrichtung (1').

10. Vorrichtung nach wenigstens einem der vorhergehenden Ansprüche, **dadurch gekennzeichnet, dass** die Substrate (A1, A2) kontinuierlich oder schrittweise verstellbar sind.

11. Vorrichtung nach wenigstens einem der vorhergehenden Ansprüche, **dadurch gekennzeichnet, dass** die Substrate (A1, A2) im Drehsinn in oder gegen die Drahtlaufrichtung (2) mittels wenigstens eines Antriebs (1) drehbar sind.

12. Vorrichtung nach wenigstens einem der vorhergehenden Ansprüche, **dadurch gekennzeichnet, dass** die Vorrichtung (V) mehrere nacheinander angeordnete Stationen aufweist.

13. Vorrichtung nach Anspruch 11, **dadurch gekennzeichnet, dass** die Substrate in den Stationen in einer gemeinsamen Ebene oder in um die Drahtachse (X) relativ zueinander versetzten Ebenen liegen.

14. Vorrichtung nach Anspruch 1, **dadurch gekennzeichnet, dass** die Sichtkontrollzonen (K) in den Stationen nur zu einer Seite oder zu verschiedenen Seiten der Drahtachse (X) weisen.

15. Vorrichtung nach Anspruch 1, **dadurch gekennzeichnet, dass** jedes Substrat (A1, A2) aus, vorzugsweise saugfähigem Filz-, Schaumstoff-, Kunststoff-, Vlies- oder Gewebematerial (FB) besteht.

16. Vorrichtung nach Anspruch 1, **dadurch gekennzeichnet, dass** jedes Substrat auf einem starren Träger (4, 5) angebracht ist.

17. Vorrichtung nach Anspruch 1, **dadurch gekennzeichnet, dass** das Substrat (A1, A2) eine Vorratsdosis eines flüssigen, pastösen oder pulvrigen Reinigungsmittels (M) und/oder Gleitmittels und/oder abrasiven Mittels und/oder Kontaktmittels und/oder alkalischen Mittels und/oder öligen oder wachshaltigen Mittels und/oder Benetzungsmittels und/oder Schweißdrahtbalsams enthält.

18. Vorrichtung nach Anspruch 1, **dadurch gekennzeichnet, dass** die Sichtkontrollzone (K) zumindest in etwa quer zur Drahtlaufrichtung (2) orientiert ist, und dass die Substrate quer oder schräg zur Drahtlaufrichtung (2) verstellbar sind.

19. Vorrichtung nach Anspruch 18, **dadurch gekennzeichnet, dass** die beiden Substrate (A1, A2) plattenförmig und in einem Halter (6) positioniert sind, und dass die Substrate im Halter (6) oder mit dem Halter verstellbar sind.

20. Vorrichtung nach Anspruch 18, **dadurch gekennzeichnet, dass** die beiden Substrate (A1, A2) streifenförmig und zwischen Andrückelementen (7) positioniert sind, und dass die Substrate zwischen oder mit den Andrückelementen verstellbar sind.

21. Vorrichtung nach wenigstens einem der vorhergehenden Ansprüche, **dadurch gekennzeichnet, dass** auf die Sichtkontrollzone (K) eine optoelektronische Zustands-Detektionsvorrichtung (8) ausgerichtet ist, die, vorzugsweise, zumindest mit dem Verstellmechanismus (1, 1'), vorzugsweise auch mit einer Warnanzeige (9), in Wirkverbindung steht.

22. Verfahren zum Behandeln von laufendem Drahtmaterial, insbesondere zum Reinigen und/oder Benetzen und/oder Imprägnieren, in der das Drahtmaterial (D) in wenigstens einer Station zwischen zwei gegen das Drahtmaterial (D) gehaltenen Substraten (A1, A2) durchläuft, deren zueinander weisende Oberflächen einander überlappen und das Drahtmaterial mit einem sich verändernden Oberflächenzustand kontaktieren, und mit einem Verstellmechanismus (1, 1') zum relativen Verstellen der Substrate wenigstens mit einer quer zur Drahtlaufrichtung (2) orientierten Bewegungskomponente, **dadurch gekennzeichnet, dass** zumindest eine freigelassene Sichtkontrollzone (K) wenigstens einer Substratoberfläche in Kontakt mit dem Drahtmaterial (D) gebracht wird, dass der Oberflächenzustand der Sichtkontrollzone (K) im Hinblick auf eine Verschlechterung der Behandlungsqualität abgelesen oder abgetastet wird, und dass das Ablese- oder Abtastresultat als Entscheidungshilfe zum Verstellen oder zum Austausch der Substrate (A1, A2) berücksichtigt wird.

## Claims

1. Apparatus (V) for treating, particularly cleaning and/or wetting and/or impregnating, moving wire material, in which the wire material (D) passes through at least one station between two substrates (A1, A2) held against the wire material (D), the surfaces directed towards one another of which overlap and contact the wire material with a varying surface condition and with an displacement mechanism (1, 1') for relative displacement of the substrates, at least with a component of movement orientated transversely to the direction of movement (2) of the wire, **characterised in that** the substrate surfaces (C1, C2) overlap one another only with the exception of at least one visual monitoring zone (K), which remains exposed and is displaceable with the transverse component of movement relative to the wire material (D) and which contacts the wire material (D) on one side.

2. Apparatus as claimed in Claim 1, **characterised in that** the two substrates (A1, A2) are rotatable about a common axis of rotation (Y), that with at least substantially the same geometrical shape the one substrate is smaller than the other and that the visual monitoring zone (K) is constituted by the difference in size on the larger substrate.

3. Apparatus as claimed in Claim 1, **characterised in that** the two substrates (A1, A2) are rotatable about a common axis of rotation (Y) and that the visual monitoring zone (K) is constituted by different geometrical shapes and/or a relative offset of the substrates about the axis of rotation.

4. Apparatus as claimed in Claim 1, **characterised in that** the substrates (A1, A2), preferably with approximately the same size and substantially the same geometrical shape, are rotatable about two parallel axes of rotation (Y, Y'), which are spaced apart in the plane defined by the substrate surfaces.

5. Apparatus as claimed in Claim 2 or 4, **characterised in that** the substrates (A1, A2) are circular discs.

6. Apparatus as claimed in Claim 3 or 4, **characterised in that** the substrates (A1, A2) are polygonal discs.

7. Apparatus as claimed in Claim 1, **characterised in that** the visual monitoring zone (K) is smaller than the region of overlap.

8. Apparatus as claimed in Claim 1, **characterised in that** at least one substrate (A2) has a cut-out (11), which is open to the edge of the substrate, or a window (12, 13) positioned within the substrate edge, which defines the visual monitoring zone (K) on the surface of the other substrate (A1).

9. Apparatus as claimed in Claim 1, **characterised in that** the displacement movement is derivable from the frictional resistance of the substrates (A1, A2) on the wire material (D), preferably by means of a braking device (1').

10. Apparatus as claimed in at least one of the preceding claims, **characterised in that** the substrates (A1, A2) are continuously or incrementally displaceable.

11. Apparatus as claimed in at least one of the preceding claims, **characterised in that** the substrates (A1, A2) are rotatable in the direction of rotation by means of at least one actuator in or against the direction of movement (2) of the wire.

12. Apparatus as claimed in at least one of the preceding claims, **characterised in that** the apparatus (V) has a plurality of successively arranged stations.

13. Apparatus as claimed in Claim 11, **characterised in that** the substrates in the stations are situated in a common plane or in planes relatively offset from one another about the wire axis (X).

14. Apparatus as claimed in Claim 1, **characterised in that** the visual monitoring zones (K) in the stations are directed towards only one side or towards different sides of the wire axis (X).

15. Apparatus as claimed in Claim 1, **characterised in that** each substrate (A1, A2) consists of preferably absorbent felt material, foamed material, plastic material, fleece material or textile material (FB).

16. Apparatus as claimed in Claim 1, **characterised in that** each substrate is mounted on a rigid carrier (4, 5).

17. Apparatus as claimed in Claim 1, **characterised in that** the substrate (A1, A2) includes a supply dose of a liquid, pasty or pulverulent cleaning agent (M) and/or lubricant and/or abrasive agent and/or contact agent and/or alkaline agent and/or oily or wax-containing agent and/or wetting agent and/or welding wire balsam.

18. Apparatus as claimed in Claim 1, **characterised in that** the visual monitoring zone (K) is orientated at least approximately transverse to the direction of movement (2) of the wire and that the substrates are displaceable transversely or obliquely to the direction of movement (2) of the wire.

19. Apparatus as claimed in Claim 18, **characterised in that** the two substrates (A1, A2) are plate-shaped and positioned in a holder (6) and that the substrates are displaceable in the holder (6) or with the holder.

20. Apparatus as claimed in Claim 18, **characterised in that** the two substrates (A1, A2) are strip-shaped and positioned between pressure elements (7) and that the substrates are displaceable between or with the pressure elements.

21. Apparatus as claimed in at least one of the preceding claims, **characterised in that** aligned with the visual monitoring zone (K) there is an opto-electronic condition detection device (8), which, preferably, is operatively connected at least to the displacement mechanism (1, 1') and preferably also to a warning indicator (9).

22. A method of treating, particularly cleaning and/or wetting and/or impregnating, moving wire material, in which the wire material (D) moves, in at least one station, between two substrates (A1, A2) held against the wire material (D), the surfaces directed towards one another of which overlap one another and contact the wire material with a varying surface condition, and with an displacement mechanism (1, 1') for relative displacement of the substrates, at least with a component of movement orientated transversely to the direction of movement (2) of the wire, **characterised in that** at least one visual monitoring zone (K), which is left free, of at least one substrate surface is brought into contact with the wire material (D), that the surface condition of the visual monitoring zone (K) is read or scanned with regard to an impairment in the treatment quality and that the result of the reading or scanning is used as an aid to the decision to displace or to replace the substrates (A1, A2).

## Revendications

1. Dispositif (V) pour traiter un matériau sous forme de fil défilant, en particulier pour le nettoyage et/ou le mouillage et/ou l'imprégnation, dans lequel le matériau sous forme de fil (D) passe dans au moins une station entre deux substrats (A1, A2) maintenus contre le matériau sous forme de fil (D), dont les surfaces tournées l'une vers l'autre se chevauchent et contactent le matériau sous forme de fil avec un état de surface qui se modifie, et avec un mécanisme de réglage (1, 1') pour l'ajustement relatif des substrats avec au moins une composante du mouvement orientée transversalement par rapport à la direction de défilement du fil (2), **caractérisé en ce que** les surfaces des substrats (C1, C2) ne se chevauchent l'une l'autre qu'à l'exception d'au moins une zone de contrôle visuel (K) restant libre, qui contacte le matériau sous forme de fil (D) de façon unilatérale, réglable en même temps par rapport au matériau sous forme de fil (D) par la composante de mouvement transversal.

2. Dispositif selon la revendication 1, **caractérisé en ce que** les deux substrats (A1, A2) sont mobiles en rotation autour d'un axe de rotation (Y) commun, **en ce que** pour au moins essentiellement la même forme géométrique, l'un des substrats est plus petit que l'autre, et **en ce que** la zone de contrôle visuel (K) est formée par la différence de taille sur le substrat le plus grand.

3. Dispositif selon la revendication 1, **caractérisé en ce que** les deux substrats (A1, A2) sont mobiles en rotation autour d'un axe de rotation (Y) commun et **en ce que** la zone de contrôle visuel (K) est formée par différentes formes géométriques et/ou par un décalage relatif des substrats autour de l'axe de rotation.

4. Dispositif selon la revendication 1, **caractérisé en ce que** les substrats (A1, A2), de préférence avec à peu près la même taille et essentiellement la même forme géométrique, sont mobiles en rotation autour de deux axes de rotation (Y, Y') parallèles et écartés dans le plan défini par les surfaces des substrats.

5. Dispositif selon la revendication 2 ou 4, **caractérisé en ce que** les substrats (A1, A2) sont des plaques circulaires.

6. Dispositif selon la revendication 3 ou 4, **caractérisé en ce que** les substrats (A1, A2) sont des plaques polygonales.

7. Dispositif selon la revendication 1, **caractérisé en ce que** la zone de contrôle visuel (K) est plus petite que la zone de chevauchement.

8. Dispositif selon la revendication 1, **caractérisé en ce qu'**au moins un substrat (A2) comporte une découpe (11) ouverte du côté du bord du substrat ou une fenêtre (12, 13) placée à l'intérieur du bord du substrat, qui définit la zone de contrôle visuel (K) à la surface de l'autre substrat (A1).

9. Dispositif selon la revendication 1, **caractérisé en ce que** le mouvement de réglage peut être déduit de la résistance de frottement des substrats (A1, A2) sur le matériau sous forme de fil (D), de préférence par l'intermédiaire d'un dispositif de freinage (1').

10. Dispositif selon l'une au moins des revendications précédentes, **caractérisé en ce que** les substrats (A1, A2) peuvent être réglés continûment ou graduellement.

11. Dispositif selon l'une au moins des revendications précédentes, **caractérisé en ce que** les substrats (A1, A2) sont tournants en sens de rotation dans le sens de défilement du fil (2) ou en sens inverse au moyen d'au moins un entraînement (1).

12. Dispositif selon l'une au moins des revendications précédentes, **caractérisé en ce que** le dispositif (V) comporte plusieurs stations disposées l'une après l'autre.

13. Dispositif selon la revendication 1, **caractérisé en ce que** dans les stations, les substrats se trouvent dans un plan commun ou dans des plans décalés l'un par rapport à l'autre autour de l'axe du fil (X).

14. Dispositif selon la revendication 1, **caractérisé en ce que** les zones de contrôle visuel (K) dans les stations sont orientées d'un côté seulement ou de différents côtés de l'axe du fil (X).

15. Dispositif selon la revendication 1, **caractérisé en ce que** chaque substrat (A1, A2) consiste en feutre, en matériau expansé, en non-tissé ou en tissu, de préférence absorbants.

16. Dispositif selon la revendication 1, **caractérisé en ce que** chaque substrat est monté sur un support (4, 5) rigide.

17. Dispositif selon la revendication 1, **caractérisé en ce que** le substrat (A1, A2) contient une dose de réserve d'un agent de nettoyage (M) liquide, pâteux ou pulvérulent et/ou d'un lubrifiant et/ou d'un agent abrasif et/ou d'un agent de contact et/ou d'une substance alcaline et/ou d'une substance huileuse ou contenant de la cire et/ou d'un agent mouillant et/ou d'un baume de fil d'apport de soudage.

18. Dispositif selon la revendication 1, **caractérisé en ce que** la zone de contrôle visuel (K) est orientée au moins à peu près transversalement par rapport à la direction de défilement du fil (2) et **en ce que** les substrats sont réglables transversalement ou obliquement par rapport à la direction de défilement du fil (2).

19. Dispositif selon la revendication 18, **caractérisé en ce que** les deux substrats (A1, A2) sont en forme de plaque et sont positionnés dans un support (6), et **en ce que** les substrats sont réglables dans le support (6) ou avec le support.

20. Dispositif selon la revendication 18, **caractérisé en ce que** les deux substrats (A1, A2) sont en forme de bande et sont positionnés entre des éléments de pression (7), et **en ce que** les substrats sont réglables entre ou avec les éléments de pression.

21. Dispositif selon l'une au moins des revendications précédentes, **caractérisé en ce qu'**un dispositif optoélectronique de détection d'état (8) qui se trouve en relation fonctionnelle, de préférence, au moins avec le mécanisme de réglage (1, 1'), de préférence aussi avec un affichage d'avertissement (9), est dirigé sur la zone de contrôle visuel (K).

22. Procédé pour traiter un matériau sous forme de fil défilant, en particulier pour le nettoyage et/ou le mouillage et/ou l'imprégnation, dans lequel le matériau sous forme de fil (D) passe dans au moins une station entre deux substrats (A1, A2) maintenus contre le matériau sous forme de fil (D), dont les surfaces tournées l'une vers l'autre se chevauchent et contactent le matériau sous forme de fil avec un état de surface qui se modifie, et avec un mécanisme de réglage (1, 1') pour l'ajustement relatif des substrats avec au moins une composante du mouvement orientée transversalement par rapport à la direction de défilement du fil (2), **caractérisé en ce qu'**au moins une zone de contrôle visuel (K), laissée découverte, d'au moins une surface de substrat, est amenée en contact avec le matériau sous forme de fil (D), **en ce que** l'état de surface de la zone de contrôle visuel (K) est lu ou palpé du point de vue d'une altération de la qualité du traitement et **en ce qu'**il est tenu compte du résultat de la lecture ou du palpage comme aide à la décision pour le changement de réglage ou pour le remplacement des substrats (A1, A2).
